# EUROPEAN PATENT SPECIFICATION

(11) **EP 0 327 300 B1**
(45) Date of publication and mention of the grant of the patent: **03.04.1996**
(21) Application number: 89300906.8
(22) Date of filing: 31.01.1989
(51) Int. Cl.: C08L 81/02, C08L 51/06

(54) **Polyarylene sulfide resin composition**
Polyarylensulfid-Harzzusammensetzung
Composition de polyarylène sulfure

(30) Priority: 03.02.1988 JP 23213/88
(43) Date of publication of application: 09.08.1989
(73) Proprietor: POLYPLASTICS CO. LTD., Higashi-ku Osaka-shi Osaka (JP)
(72) Inventor: Nonaka, Toshihumi, Fuji-shi Shizuoka (JP); Nitoh, Toshikatsu, Fuji-shi Shizuoka (JP)
(74) Representative: Jackson, Peter

(56) References cited:
- EP-A- 0 228 268
- EP-A- 0 247 412
- PATENT ABSTRACTS OF JAPAN vol. 12, no. 15 (C-469)(2862), 16th January 1988; & JP-A-62 172 057 (TORAY) 29-07-1987

## Description

The present invention relates to a polyarylene sulfide resin composition. Particularly, it relates to a polyarylene sulfide resin composition which is improved in impact resistance and is excellent in heat resistance and moldability.

### [Prior Art ]

Recently, a thermoplastic resin which has high heat resistance and chemical resistance and is excellent in flame retardance has been demanded as material for the components of electrical or electronic appliances, automobile devices or chemical instruments. A polyarylene sulfide resin represented by polyphenylene sulfide is one of the resins satisfying this demand and low costs for its physical properties, so that the demand therefor has increased.

However, a polyarylene sulfide resin has essential disadvantages in that it is poor in toughness and is brittle and that it is poor in mechanical properties represented by impact resistance.

Known methods for overcoming these disadvantages include:
(1) a method of adding a reinforcement such as glass fiber or carbon fiber,
   and
(2) a method of adding other polymer.

However, these methods are not satisfactory enough owing to their inherent problems.

Namely, according to the method (1), although a polyarylene sulfide resin is remarkably improved in strength, stiffness, heat resistance and dimensional stability so as to permit the use thereof as an engineering plastic, the polyarylene sulfide resin composition according to the method (1) is inferior to other engineering plastics such as polyacetal, PBT, polysulfone or polyether sulfone in elongation, toughness and impact resistance, so that the use thereof is limited. On the other hand, although many attempts have been made with respect to the method (2), most of the attempts bring about lowering in the thermal deformation temperature and the results of the follow-up made by the inventors of the present invention revealed that few of them could exhibit a sufficient effect. Among them, for example, the addition of an olefin copolymer comprising an α-olefin and a glycidyl ester of an α,β-unsaturated acid as described in Japanese Patent Laid-Open Nos. 154757/1983, 152953/1984 and 189166/1984 is more effective in efficiently reducing the above disadvantages. European patent application EP-A-0228268 describes a polyarylene sulfide resin composition comprising (A) a polyarylene sulfide resin, (B) an olefinic copolymer containing 60 to 99.5% by weight of an α-olefin and 0.5 to 40% of a a glycidyl ester of an α,β-unsaturated acid and (b), in which the polyarylene sulfide resin (A) is treated to improve its affinity with the component (B). However, in many cases, the resulting composition exhibits insufficient impact resistance, so that additional improvements have still been sought.

The inventors of the present invention have eagerly studied for the purpose of further enhancing the effect brought about by the above addition of an olefin copolymer comprising an α-olefin and a glycidyl ester of an α,β-unsaturated acid to thereby improve the impact resistance of a polyarylene sulfide resin more satisfactorily and have found that the impact resistance of a polyarylene sulfide resin can be remarkably improved not by the above-mentioned addition of a copolymer comprising an α-olefin and a glycidyl ester of an α,β-unsaturated acid alone, but by the addition of a graft copolymer obtained by chemically bonding a specified polymer to such a copolymer to form a branched or crosslinked chain. The present invention has been accomplished on the basis of this finding.

Namely, the present invention relates to a polyarylene sulfide resin composition comprising
(A) 100 parts by weight of a polyarylene sulfide resin,
(B) 0.5 to 50 parts by weight of a graft copolymer comprising (a) an olefin copolymer comprising an α-olefin and a glycidyl ester of an α,β-unsaturated acid and (b) one or more polymers or copolymers constituted of a repeating unit represented by the following general formula (1), both of which are chemically bonded to each other to form a branched or crosslinked structure: 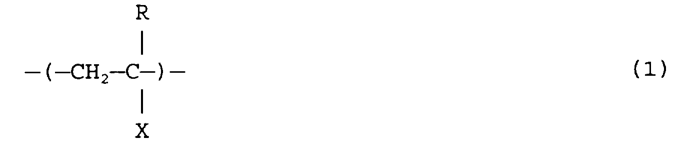 wherein R stands for a hydrogen atom or a lower alkyl group, and X is phenyl, cyano, -COOCH₃, -COOC₂H₅, -COOC₄H₉, and/or -COOCH₂CH(C₂H₅)C₄H₉
   and wherein the ratio of the segments (a) and (b) in the graft copolymer (B) is 95:5 to 40:60, and
(C) 0 to 400 parts by weight of an inorganic filler.

The resin (A) to be used as the base in the present invention is a polyarylene sulfide resin comprising at least 70 molar % of a repeating unit represented by the structural formula: (̵Ar-S)̵ (wherein Ar is an aryl group) (hereinafter this resin will be abbreviated to "PAS"). A representative example thereof is polyphenylene sulfide comprising at least 70 molar % of a repeating unit represented by the structural formula: (̵Ph-S)̵ (wherein Ph is a phenyl group) (hereinafter this resin will be abbreviated to "PPS"). Particularly, it is suitable to use a polyphenylene sulfide having a melt viscosity as determined at 310°C with a shear rate of 1200/sec of 10 to 20000 P (1-2000 Pas), preferably 100 to 5000 P (10-500 Pas).

Known polyphenylene sulfide resins are classified into two groups. One group comprises substantially linear ones free from branched or crosslinked structure, while the other group comprises ones having a branched or crosslinked structure, the difference in the structure resulting mainly from the preparation process thereof. Although the present invention is effective for both the groups, it is more effective for linear ones free from any branched structure.

Preferred examples of the PPS polymer to be used in the present invention include polymers comprising at least 70 molar %, still preferably at least 80 molar %, of a p-phenylene sulfide unit:

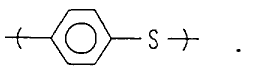

If the content of this unit is less than 70 molar %, the crystallinity of the resulting polymer will be too low to attain a sufficiently high strength and the toughness thereof will be also poor, though high crystallinity is a characteristic of a crystalline polymer.

The linear PSS polymer to be used in the present invention may contain at most 30 molar % of another comonomer unit and examples of the comonomer unit include a m-phenylene sulfide unit: 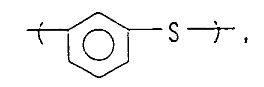 a diphenyl ketone sulfide unit: 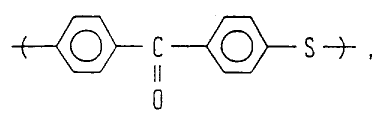 a diphenyl sulfone sulfide unit: 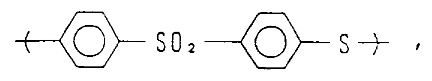 a diphenyl sulfide unit 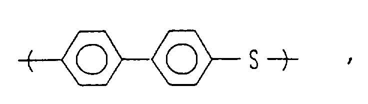 a diphenyl ether sulfide unit: 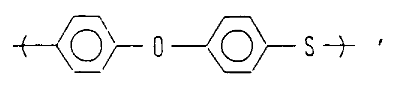 a 2,6-naphthalene sulfide unit: 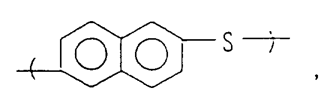 and a trifunctional unit:

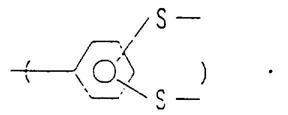

It is preferable that the content of a trifunctional unit be 1 molar % or below.

Particularly preferred examples of the PPS polymer to be used in the present invention include a linear PPS homopolymer composed of p-phenylene sulfide units: 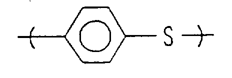 and linear block copolymers comprising 70 to 95 molar % of p-phenylene sulfide repeating units: 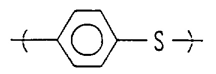 and 5 to 30 molar % of m-phenylene sulfide repeating units:

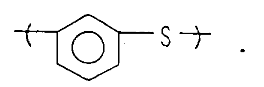

The graft copolymer (B) to be used in the present invention is a graft copolymer comprising (a) an olefin copolymer comprising an α-olefin and a glycidyl ester of an α,β-unsaturated acid and (b) one or more polymers or copolymers constituted of a repeating unit represented by the following general formula (1), both of which are chemically bonded to each other to form a branched or crosslinked structure: 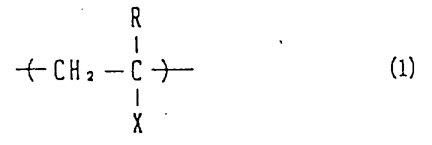 wherein R stands for a hydrogen atom or a lower alkyl group and X is
-COOCH₃, -COOC₂H₅, -COOC₄H₉, and -COOCH₂CH(C₂H₅)C₄H₉ ,

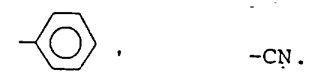

The α-olefin which is one of the monomers constituting the copolymer (a) includes ethylene, propylene and butene-1, among which ethylene is preferably used. The glycidyl ester of an α,β-unsaturated acid which is the other of the monomers constituting the copolymer (a) is represented by the general formula (2): 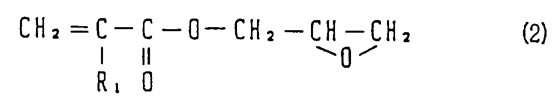 wherein R₁ stands for a hydrogen atom or a lower alkyl group.

Examples thereof include glycidyl acrylate, glycidyl methacrylate and glycidyl ethacrylate, among which glycidyl methacrylate is preferably used. The copolymerization of an α-olefin (such as ethylene) with a glycidyl ester of an α,β-unsaturated acid may be carried out by a conventional radical polymerization method to obtain a copolymer (a).

It is preferable that the segment (a) comprise 70 to 99% by weight of an α-olefin and 30 to 1% by weight of a glycidyl ester of an unsaturated acid.

The polymer or copolymer (b) to be grafted onto the copolymer (a) to form a branched or crosslinked chain is a polymer comprising a repeating unit represented by the general formula (1) or a copolymer comprising two or more repeating units represented thereby, and examples thereof include polymethyl methacrylate, polyethyl acrylate, polybutyl acrylate, poly-2-ethylhexyl acrylate, polystyrene, polyacrylonitrile, polyacrylonitrile-styrene copolymers, polybutyl acrylate-polymethyl methacrylate copolymers and polybutyl acrylate-polystyrene copolymers. These polymers and copolymers can be each prepared by the radical polymerization of corresponding vinyl monomers.

The component (B) to be characteristically used in the present invention is neither the above copolymer (a) nor the (co)polymer (b), but a graft copolymer comprising the copolymer (a) and the (co)polymer, (b), both of which are chemically bonded to each other at at least one point to form a branched or crosslinked structure. In virtue of this grafted structure, the component (B) attains a remarkable effect which could not be attained by the copolymer (a) or the (co)polymer (b) alone.

Although the process for preparing the graft copolymer from the segments (a) and (b) is not particularly limited, the graft copolymer can be easily prepared by radical reaction. For example, a free radical is formed in the polymer (b) by the use of, e.g., a peroxide and the resulting polymer (b) is melt kneaded with the segment (a) to obtain a graft copolymer (B).

The amount of the component (B) per 100 parts by weight of the component (A) is 0.5 to 50 parts by weight, preferably 1 to 20 parts by weight.

If the amount of the component (B) is too small, the objective improvement in the toughness and impact resistance will be hardly attained, while if the amount is too large, the thermal deformation temperature will be low and the mechanical properties such as stiffness will be unfavorably affected adversely.

Although the inorganic filler (C) is not necessarily an essential component in the present invention, the addition thereof is preferable for producing a molded article which is excellent in mechanical strength heat resistance, dimensional stability (resistance to deformation and warp), electrical properties and other performances. The inorganic filler (C) may be selected from among fibrous, powdery, granular and flaky ones depending upon the object.

Examples of suitable fibrous fillers include inorganic fibrous materials, for example, glass fiber, asbestos fiber, carbon fiber, silica fiber, silica/alumina fiber, zirconia fiber, boron nitride fiber, silicon nitride fiber, boron fiber, potassium titanate fiber and fibers of metals such as stainless steel, aluminum, titanium, copper or brass. Among them, glass fiber and carbon fiber are most representative. Further, the fibrous filler includes high-melting organic fibrous materials, and particular examples thereof include polyamides, fluororesins and acrylic resins.

The powdery or granular filler includes carbon black, silica, quartz powder, glass bead, glass powder, silicates such as calcium silicate, aluminum silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulfates such as calcium sulfate and barium sulfate; silicon carbide, silicon nitride, boron nitride and various metal powders.

The flaky filler includes mica, glass flake and various metal foils.

These inorganic fillers may be used alone or as a mixture of two or more of them. The simultaneous use of a fibrous filler, particularly glass or carbon fiber, with a granular and/or flaky filler is particularly effective in producing an article which is excellent not only in mechanical strengths but also in dimensional accuracy and electrical properties.

If necessary, a coupling agent or surface treatment is preferably used together with these fillers. Examples thereof include functional compounds such as epoxy, isocyanate, silane and titanate compounds. These compounds may be applied to the filler prior to the preparation of the composition to carry out the surface treatment or coupling of the filler or may be added in the course of preparation thereof.

The amount of the inorganic filler is 0 to 400 parts by weight, preferably 10 to 300 parts by weight, per 100 parts by weight of the polyarylene sulfide resin (A). If the amount is less than 10 parts by weight, the mechanical strengths will be slightly poor, while if it is too large, the molding will be difficult and the mechanical strengths of the resulting molded article will be problematic.

The composition of the present invention may auxiliarily contain a small amount of other thermoplastic resin in addition to the above components depending upon the object. This thermoplastic resin may be any one as far as it is stable at high temperature. Examples thereof include aromatic polyesters comprising aromatic dicarboxylic acids and diols or hydroxy carboxylic acids, such as polyethylene terephthalate and polybutylene terephthalate; polyamide, polycarbonate, ABS, polyphenylene oxide, polyalkyl acrylate, polyacetal, polysulfone, polyether sulfone, polyether imide, polyether ketone and fluororesins. These thermoplastic resins may be used also as a mixture of two or more of them.

Further, the composition of the present invention may suitably contain an additive which is conventionally added to a thermoplastic or thermosetting resin, depending upon the performance required. Examples of such an additive include stabilizers such as antioxidant and ultraviolet absorber, antistatic agent, flame retardant, coloring agent such as dye and pigment, lubricant, crystallization accelerator and nucleating agent.

The polyarylene sulfide resin composition of the present invention can be prepared by a conventional process for the preparation of a synthetic resin composition and with conventional equipment therefor. Namely, necessary components are mixed and kneaded and extruded with a single- or twin-screw extruder to obtain a pellet. In the preparation, a part of the necessary components may be mixed, as a master batch, with the residual part thereof, followed by molding. Alternatively, a part or the whole of the resinous components may be preliminarily ground, followed by mixing and extrusion.

As described in the above description and Examples, the polyarylene sulfide resin composition of the present invention is remarkably improved in mechanical properties, particularly toughness and impact resistance as compared with the one of the prior art and exhibits reduced lowering in the thermal deformation temperature, though compositions similar to the one of the present invention generally exhibit significant lowering therein. Thus, the composition of the present invention is expectable as a material suitable for various functional components.

### [Example]

The present invention will now be described in more detail by referring to the following Examples, though it is not limited by them.

### Examples 1 to 11 and Comparative Examples 1 to 7

Each of the compounds given in Tables 1 to 3 of an amount given therein was added, as the component (B), to a PSS resin ("Fortron KPS"; a product of Kureha Chemical Industry Co., Ltd. -Fortron is a registered trademark) as the component (A), followed by premixing with a Henschel mixer for 5 minutes. A commercially available glass fiber (diameter: 13 µm, length: 3 mm) and/or calcium carbonate (average particle size: 4 µm) were added each in an amount given in Tables 1 to 3 to the obtained premix, followed by mixing for 2 minutes. The obtained mixture was extruded with an extruder at a cylinder temperature of 310°C to obtain pellets of a polyphenylene sulfide resin composition. The pellets were molded into an ASTM test piece with an injection molding machine at a cylinder temperature of 320°C and a mold temperature of 150°C. This piece was examined for physical properties. The results are shown in Tables 1 to 3.

As Comparative Examples, in a similar manner to the one described above, the preparation of a composition was carried out except that no component (B) was added or the component (a) or (b) was added alone as the component (B), and the obtained composition was molded into a test piece and examined. The results are shown in Tables 1 to 3.

The evaluation items and the method of measurement thereof are as follows:
Izod impact strength: determined according to ASTM D-256 with respect to both notched and unnotched sides.
Thermal deformation temperature: determined according to ASTM D-648 (under a load of 18.6 kg/cm).
Tensile test: Tensile strength and tensile elongation were determined according to ASTM D-638.

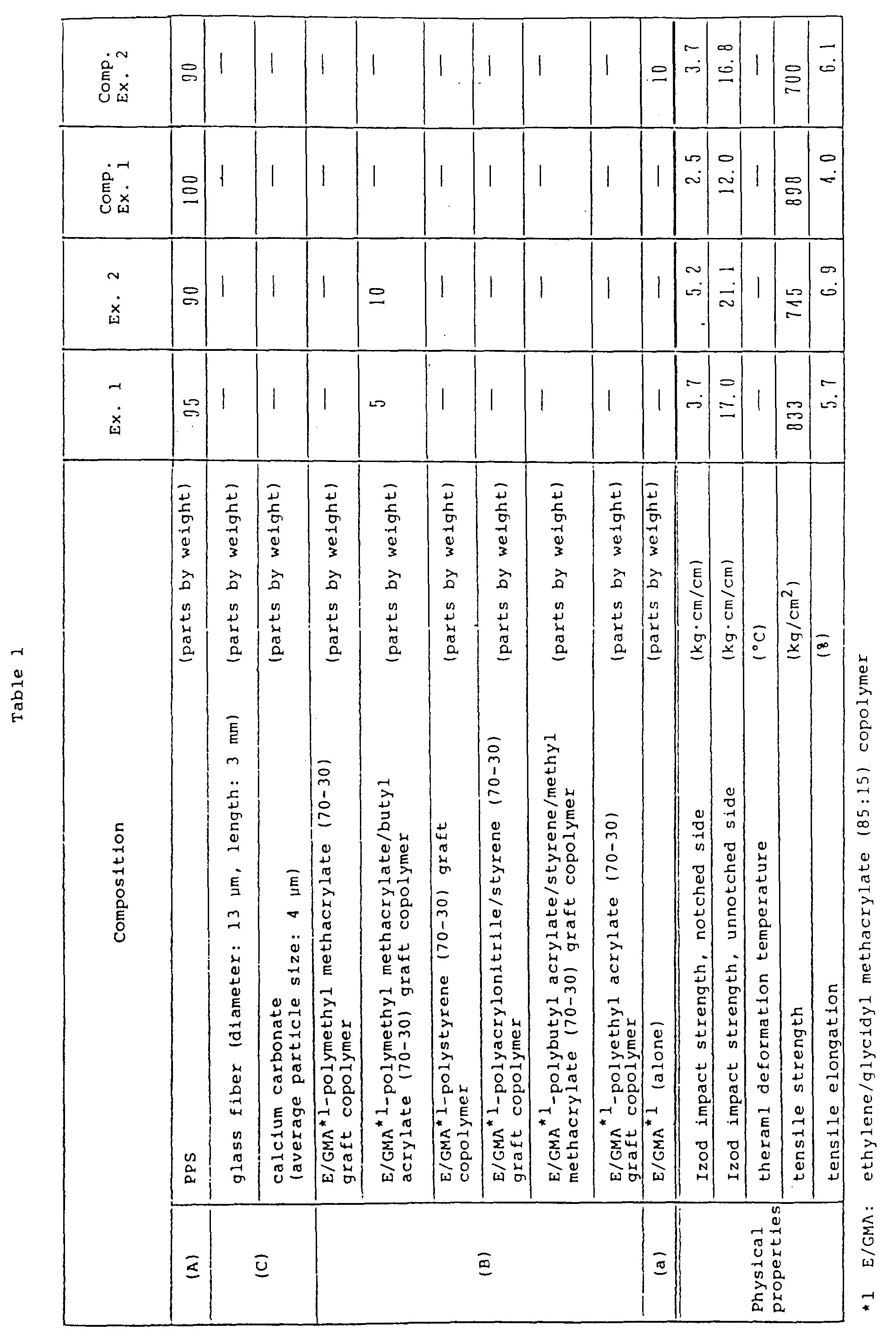

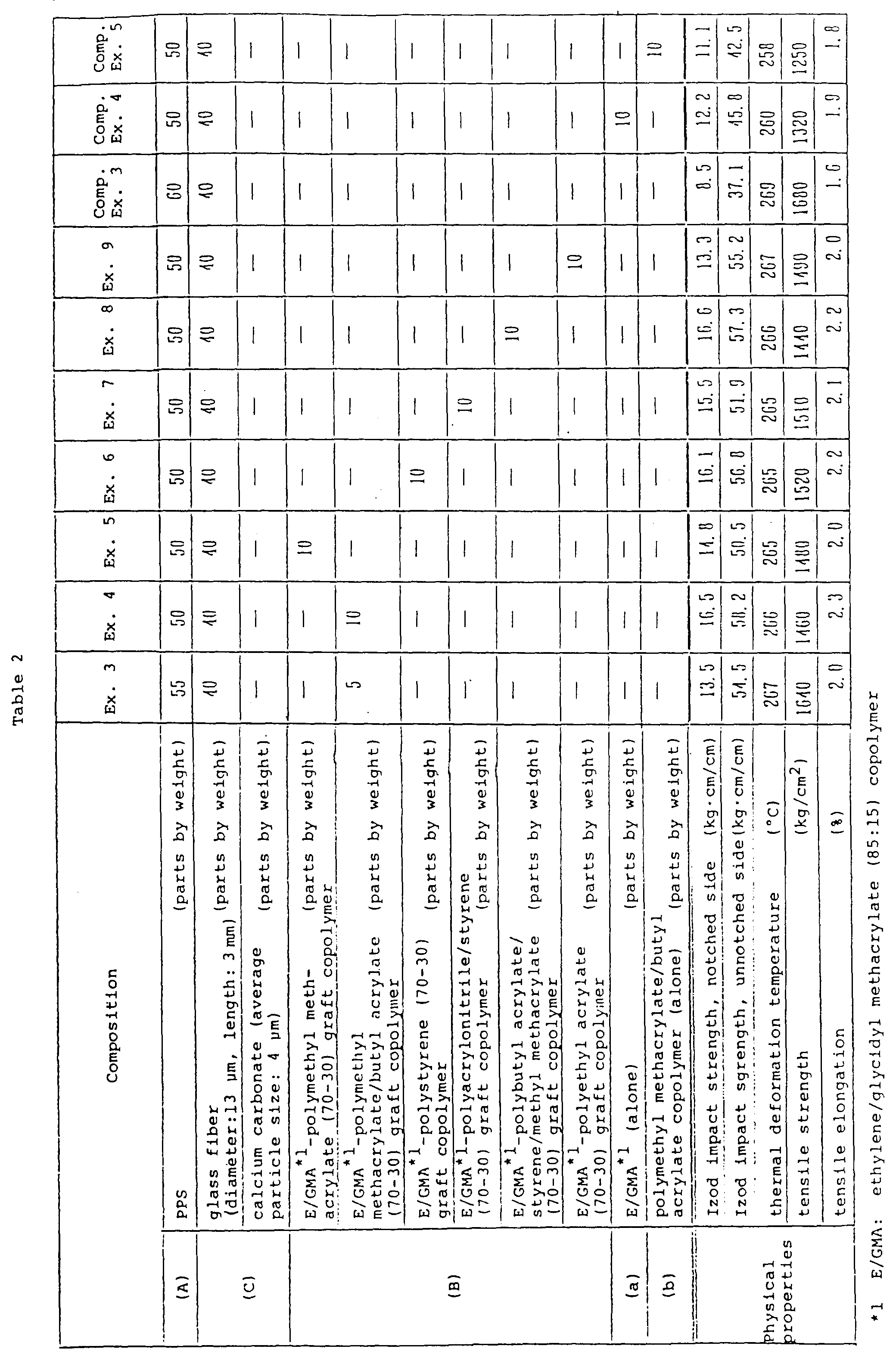

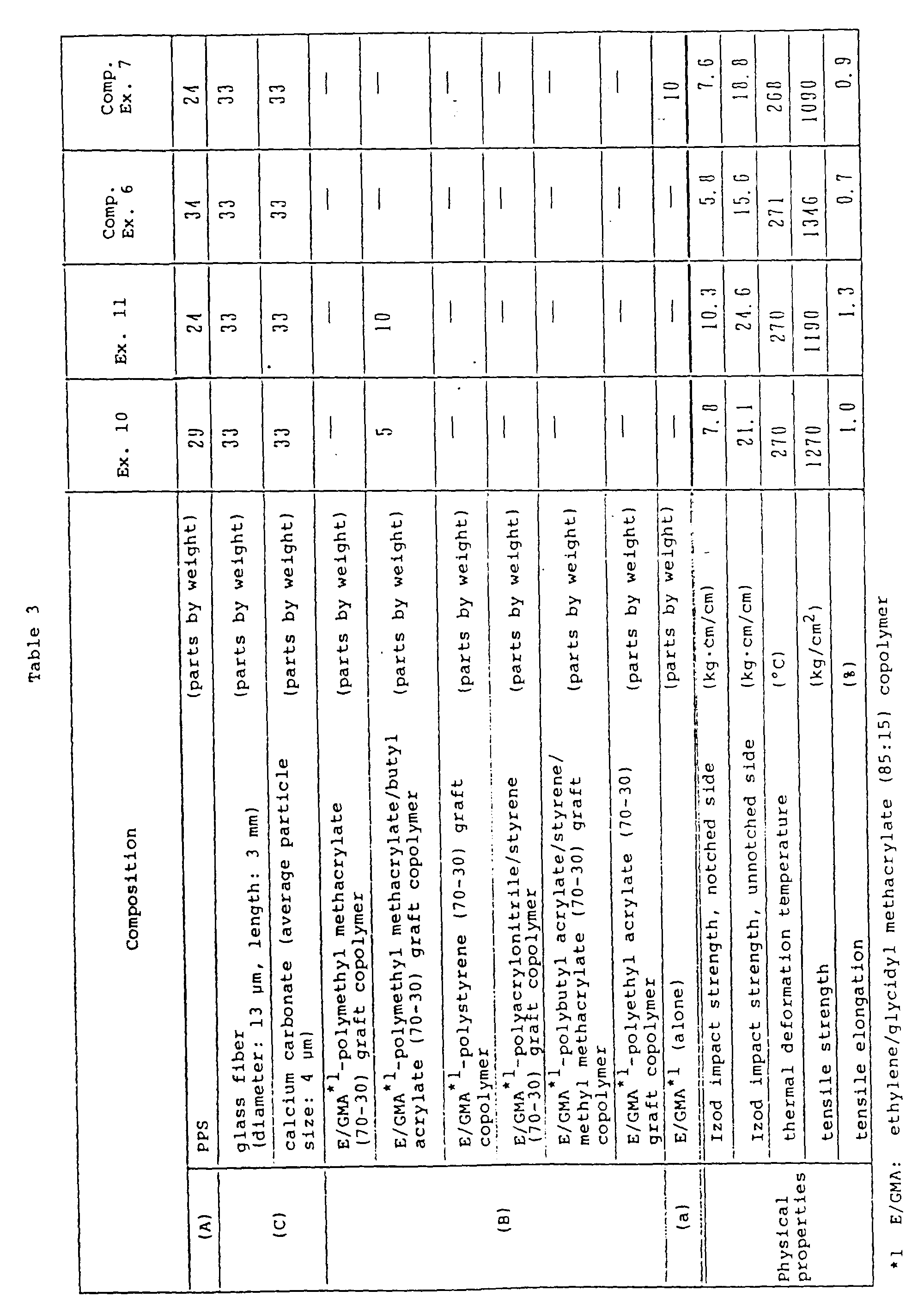

## Claims

1. A polyarylene sulfide resin composition comprising
(A) 100 parts by weight of a polyarylene sulfide resin,
(B) 0.5 to 50 parts by weight of a graft copolymer comprising (a) an olefin copolymer comprising an α-olefin and a glycidyl ester of an α,β-unsaturated acid and (b) one or more polymers or copolymers constituted of a repeating unit represented by the following general formula (1), both of which are chemically bonded to each other to form a branched or crosslinked structure: 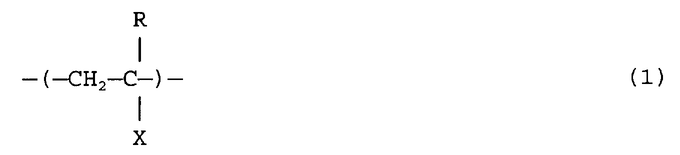 wherein R stands for a hydrogen atom or a lower alkyl group and X stands for one or more members selected from -COOCH₃, -COOC₂H₅, -COOC₄H₉, -COOCH₂CH (C₂H₅) C₄H₉, phenyl and cyano,
and wherein the ratio of the segments (a) and (b) in the graft copolymer (B) is 95:5 to 40:60, and
(C) 0 to 400 parts by weight of an inorganic filler.

2. A polyarylene sulfide resin composition as set forth in claim 1, wherein said polyarylene sulfide resin (A) is a poly-p-phenylene sulfide containing at least 70% by weight of a repeating unit represented by the formula:
-[-Ph-S-]-

3. A polyarylene sulfide resin composition as set forth in claim 2, wherein the said poly-p-phenylene sulfide contains at least 80% by weight of the said repeating unit.

4. A polyarylene sulfide resin composition as set forth in any preceding claim, wherein the polyarylene sulfide resin (A) is selected from a homopolymer composed of p-phenylene sulfide units and a linear block copolymer comprising 70 to 95 molar % of p-phenylene sulfide units and 5 to 30 molar % of m-phenylene sulfide units.

5. A polyarylene sulfide resin composition as set forth in any preceding claim, wherein said olefin copolymer (a) constituting the component (B) is a copolymer comprising ethylene and a glycidyl ester of an α,β-unsaturated acid.

6. A polyarylene sulfide resin composition as set forth in any preceding claim, wherein the segment (a) of the component (B) comprises 70 to 99% by weight of the α-olefin and 30 to 1 % by weight of the glycidyl ester.

7. A polyarylene sulfide resin as set forth in any preceding claim, wherein the amount of the graft copolymer (B) per 100 parts by weight of the component (A) is 1 to 20 parts by weight.

8. A polyarylene sulfide resin composition as set forth in claim 1, 2 or 3, wherein the amount of the inorganic filler (C) added is 10 to 300 parts by weight.

9. A polyarylene sulfide resin composition as set forth in any preceding claim, wherein said inorganic filler (C) is a fibrous one.

10. A polyarylene sulfide resin composition as set forth in any of the preceding claims 1 to 8, wherein said inorganic filler (C) is a combination of a fibrous one with a powdery or granular one.

11. A method of preparing a polyarylene sulfide resin composition as set forth in any of the preceding claims, which includes the step of preparing said graft copolymer (B) by radical reaction of its segments (a) and (b) in which a free radical is formed in said (co)polymer segment (b) using a peroxide and the resulting (co)polymer is melt-kneaded with the copolymer (a).

## Patentansprüche

1. Polyarylensulfidharz-Zusammensetzung, umfassend:
(A) 100 Gewichtsteile eines Polyarylensulfidharzes,
(B) 0,5 bis 50 Gewichtsteile eines Pfropfcopolymers, umfassend (a) ein Olefin-Copolymer, umfassend ein α-Olefin und einen Glycidylester einer α,β-ungesättigten Säure und (b) ein Polymer oder Copolymer oder mehrere Polymere oder Copolymere, das(die) aus einer Repetiereinheit besteht(en), die durch die folgende allgemeine Formel (1) dargestellt wird, wobei beide derselben chemisch aneinander gebunden sind, um eine verzweigte oder vernetzte Struktur zu bilden: 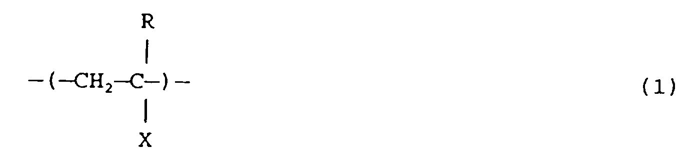 worin R ein Wasserstoffatom oder eine Niederalkylgruppe darstellt und X einen oder mehrere Reste, ausgewählt aus -COOCH₃, -COOC₂H₅, -COOC₄H₉, -COOCH₂CH(C₂H₅)C₄H₉, Phenyl und Cyano, darstellt;
und worin das Verhältnis der Segmente (a) und (b) in dem Pfropf-Copolymer (B) 95:5 bis 40:60 ist, und
(C) 0 bis 400 Gewichtsteile eines anorganischen Füllstoffs.

2. Polyarylensulfidharz-Zusammensetzung gemäß Anspruch 1, worin das Polyarylensulfidharz (A) ein Poly-p-phenylensulfid ist, das wenigstens 70 Gew.-% einer Repetiereinheit, dargestellt durch die Formel:
-[-Ph-S-]-
enthält.

3. Polyarylensulfidharz-Zusammensetzung gemäß Anspruch 2, worin das Poly-p-phenylensulfid wenigstens 80 Gew.-% der Repetiereinheit enthält.

4. Polyarylensulfidharz-Zusammensetzung gemäß irgendeinem der vorhergehenden Ansprüche, worin das Polyarylensulfidharz (A) aus einem Homopolymer, bestehend aus p-Phenylensulfid-Einheiten, und einem linearen Block-Copolymer, das 70 bis 95 Mol% p-Phenylensulfid-Einheiten und 5 bis 30 Mol% m-Phenylensulfid-Einheiten umfaßt, ausgewählt ist.

5. Polyarylensulfidharz-Zusammensetzung gemäß irgendeinem der vorhergehenden Ansprüche, worin das Olefin-Polymer (a), das die Komponente (B) ausmacht, ein Copolymer ist, umfassend Ethylen und einen Glycidylester einer α,β-ungesättigten Säure.

6. Polyarylensulfidharz-Zusammensetzung gemäß irgendeinem der vorhergehenden Ansprüche, worin das Segment (a) der Komponente (B) 70 bis 99 Gew.-% des α-Olefins und 30 bis 1 Gew.-% des Glycidylesters umfaßt.

7. Polyarylensulfidharz-Zusammensetzung gemäß irgendeinem der vorhergehenden Ansprüche, worin die Menge des Pfropf-Copolymers (B) 1 bis 20 Gewichtsteile pro 100 Gewichtsteile der Komponente (A) ist.

8. Polyarylensulfidharz-Zusammensetzung gemäß einem der Ansprüche 1, 2 oder 3, worin die Menge des zugefügten anorganischen Füllstoffs (C) 10 bis 300 Gewichtsteile ist.

9. Polyarylensulfidharz-Zusammensetzung gemäß irgendeinem der vorhergehenden Ansprüche, worin der anorganische Füllstoff (C) ein faseriger anorganischer Füllstoff ist.

10. Polyarylensulfidharz-Zusammensetzung gemäß irgendeinem der vorhergehenden Ansprüche 1 bis 8, worin der anorganische Füllstoff (C) eine Kombination aus einem faserigen anorganischen Füllstoff mit einem pulverförmigen oder körnigen anorganischen Füllstoff ist.

11. Verfahren zur Herstellung einer Polyarylensulfidharz-Zusammensetzung gemäß irgendeinem der vorhergehenden Ansprüche, umfassend die Stufe der Herstellung des Pfropf-Copolymers (B) durch radikalische Reaktion seiner Segmente (a) und (b), wobei ein freies Radikal in dem (Co)Polymer-Segment (b) unter Verwendung eines Peroxids gebildet wird, und das sich ergebende (Co)Polymer mit dem Copolymer (a) in der Schmelze geknetet wird.

## Revendications

1. Composition de résine de polysulfure d'arylène, comprenant
(A) 100 parties en poids d'une résine de polysulfure d'arylène,
(B) 0,5 à 50 parties en poids d'un copolymère greffé comprenant (a) un copolymère d'oléfine comprenant une α-oléfine et un ester glycidylique d'un acide α,β-insaturé et (b) un ou plusieurs polymères ou copolymères constitués d'une unité répétée représentée par la formule générale (1) suivante, les deux étant chimiquement liés l'un à l'autre pour former une structure ramifiée ou réticulée : 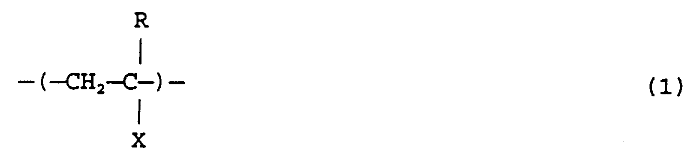 où R représente un atome d'hydrogène ou un groupe alkyle inférieur et X représente un ou plusieurs éléments choisis parmi les groupes -COOCH₃, -COOC₂H₅, -COOC₄H₉, -COOCH₂CH- (C₂H₅)C₄H₉, phényle et cyano, et dans lequel le rapport des segments (a) et (b) dans le copolymère greffé (B) est 95:5 à 40:60, et
(C) 0 à 400 parties en poids d'une charge inorganique.

2. Composition de résine de polysulfure d'arylène selon la revendication 1, dans laquelle ladite résine de polysulfure d'arylène (A) est un polysulfure de p-phénylène contenant au moins 70 % en poids d'une unité répétée représentée par la formule :
-[-Ph-S-]-

3. Composition de résine de polysulfure d'arylène selon la revendication 2, dans laquelle ledit polysulfure de p-phénylène contient au moins 80 % en poids de ladite unité répétée.

4. Composition de résine de polysulfure d'arylène selon l'une quelconque des revendications précédentes, dans laquelle la résine de polysulfure d'arylène (A) est choisie parmi un homopolymère composé d'unités sulfure de p-phénylène et un copolymère séquencé linéaire comprenant 70 à 95 % molaires d'unités sulfure de p-phénylène et 5 à 30 % molaires d'unités sulfure de m-phénylène.

5. Composition de résine de polysulfure d'arylène selon l'une quelconque des revendications précédentes, dans laquelle ledit copolymère d'oléfine (a) composant le constituant (B) est un copolymère comprenant de l'éthylène et un ester glycidylique d'un acide α,β-insaturé.

6. Composition de résine de polysulfure d'arylène selon l'une quelconque des revendications précédentes, dans laquelle le segment (a) du constituant (B) comprend 70 à 99 % en poids de la α-oléfine et 30 à 1 % en poids de l'ester glycidylique.

7. Résine de polysulfure d'arylène selon l'une quelconque des revendications précédentes, dans laquelle la quantité du copolymère greffé (B) pour 100 parties en poids du constituant (A) est 1 à 20 parties en poids.

8. Composition de résine de polysulfure d'arylène selon la revendication 1, 2 ou 3, dans laquelle la quantité de la charge inorganique (C) ajoutée est 10 à 300 parties en poids.

9. Composition de résine de polysulfure d'arylène selon l'une quelconque des revendications précédentes, dans laquelle ladite charge inorganique (C) est une charge fibreuse.

10. Composition de résine de polysulfure d'arylène selon l'une quelconque des revendications 1 à 8 précédentes, dans laquelle ladite charge inorganique (C) est une combinaison d'une charge fibreuse avec une charge poudreuse ou granulaire.

11. Procédé de préparation d'une composition de résine de polysulfure d'arylène selon l'une quelconque des revendications précédentes, qui inclut l'étape de préparation dudit copolymère greffé (B) par réaction radicalaire de ses segments (a) et (b), dans lequel un radical libre est formé dans ledit segment de (co)polymère (b) en utilisant un peroxyde et le (co)polymère obtenu est malaxé au fondu avec le copolymère (a).
